# EUROPÄISCHE PATENTSCHRIFT

(11) **EP 2 088 011 B1**
(45) Veröffentlichungstag und Bekanntmachung des Hinweises auf die Patenterteilung: **27.10.2010**
(21) Anmeldenummer: 08021263.2
(22) Anmeldetag: 08.12.2008
(51) Int. Cl.: B60H 1/00

(54) **Gehäuse-Anordnung für eine Fahrzeugklimaanlage**
Casing assembly for a motor vehicle air conditioning system
Agencement de boîtier pour un système de climatisation de véhicule

(30) Priorität: 06.02.2008 DE 102008007914
(43) Veröffentlichungstag der Anmeldung: 12.08.2009
(73) Patentinhaber: Behr GmbH & Co. KG, 70469 Stuttgart (DE)
(72) Erfinder: Dieksander, Wolfgang, 71711 Steinheim/Murr (DE); Litwing, Erich, 73565 Spraitbach (DE)
(74) Vertreter: Messnarz, Dieter

(56) Entgegenhaltungen:
- EP-A- 1 820 676
- DE-A1-102005 029 773
- US-A- 5 934 988
- US-A1- 2007 087 680

## Beschreibung

Die vorliegend Erfindung betrifft eine Fahrzeug-Klimaanlage gemäß dem Oberbegriff des Anspruchs 1.

Klimaanlagen, wie sie bei Fahrzeugen verwendet werden, weisen üblicherweise einen Verdampfer und einen Heizer auf, die in einem aus Montagegründen mehrteiligen Luftführungsgehäuse angeordnet sind, wobei die gesamte von einem Gebläse kommende Luft den Verdampfer durchströmt und - je nach Betriebszustand - durch den Heizer oder über einen Bypass am Heizer vorbei geleitet wird, wobei für eine Mischtemperierung eine Aufteilung des Luftstroms vorgesehen ist. Zur Erhöhung des Komforts sind zudem mehrzonige Klimaanlagen bekannt, bei denen Trennwände im Luftführungsgehäuse vorgesehen sind. Die Trennwände beginnen üblicherweise hinter dem Verdampfer und sind über den Bereich des Heizers weitergeführt, wobei je nach Zonenzahl und -aufteilung die unterschiedlichsten Verläufe bekannt sind. In der Regel ist eine Mitteltrennwand für eine Unterteilung der Fahrer- und Beifahrerseite sowohl für den Front- als auch den Fondbereich vorgesehen. Diese Trennwand verläuft üblicherweise vertikal und entlang der Mittellängsebene des Fahrzeugs. Ferner ist üblicherweise eine Trennwand für eine Unterteilung des Front- und des Fondbereichs vorgesehen.

Diese Trennwand verläuft üblicherweise etwa waagerecht im eingebauten Zustand der Klimaanlage. Um die Luft, welche durch den Heizer strömt mit der den Heizer über einen Bypass umströmenden Kaltluft im Falle einer Mischtemperierung zu vermischen und die temperierte Luft auf die einzelnen Öffnungen im Luftführungsgehäuse zu verteilen, von denen aus die temperierte Luft dem Fahrzeuginnenraum an verschiedenen Stellen der einzelnen Zonen zugeführt wird, ist für jede Zone ein Mischraum vorgesehen. Ferner sind Bypässe bekannt, um insbesondere im Frontbereich eine Temperaturschichtung zu erreichen, d.h. die Temperatur im Fußraum ist höher als die Temperatur im Kopfbereich.

Aus der DE 10 2005 029 773 A1 ist als nächster Stand der Technik eine derartige Kraftfahrzeug-Klimaanlage mit einem Luftführungsgehäuse und in demselben angeordnete Komponenten, wie mindestens einem Heizer und einem Einlegeteil zur Luftführung und/oder -mischung bekannt. Hierbei lässt sich die Klimaanlage von einer mehrzonigen Klimaanlage in eine wenigerzonige Klimaanlage durch miteinander verbindbare Elemente umwandeln. Die Aufteilung in einzelne Klimazonen erfolgt mittels Trennwänden im Luftführungsgehäuse, die Teil des Einlegeteils sind. Vertikal im Luftführungsgehäuse angeordnete Trennwände trennen die Fahrer- und Beifahrerseite voneinander. Horizontal angeordnete Trennwände trennen den Front- vom Fondbereich. Die Warmluft oder temperierte Luft der einzelnen, den entsprechenden Klimazonen I bis IV zugeordneten Bereiche des Luftführungsgehäuses wird anschließend an einen Mischraum, geregelt durch einzelne Klappen, auf die entsprechenden Luftkanäle, wie beispielsweise dem Fondbelüftungsluftkanal und Fondfußraumluftkanal der Beifahrerseite, oder den Luftkanälen zur fahrerseitigen Frontbelüftung (Mittel- und Seitendüsen), dem Fußraum und dem Defrostkanal, die zu der entsprechenden Klimazone führen, verteilt. Um eine Temperaturschichtung der Luft zu ermöglichen, kann Kaltluft beigemischt werden.

Ferner ist aus der EP 1 510 379 B1 eine Vorrichtung zur Luftverteilung für eine modulare Anlage zur Lüftung, Heizung und/oder Klimatisierung eines Fahrerhauses bekannt, die ein Vonichtungsgehäuse umfasst, das mindestens mit zwei Lufteinlässen ausgerüstet ist, die durch mindestens eine Vorrichtung zur Luftaufbereitung der Anlage mit einem Luftstrom beschicht werden können, mit mindestens einem Ausgang zur Luftverteilung und mit Verteilungsmitteln, die angeordnet sind, um die Luftstrom zwischen den Ausgängen zur Luftverteilung zu verteilen, wobei das Vorrichtungsgehäuse in Form eines Moduls hergestellt ist.

Es ist die Aufgabe der Erfindung, eine verbesserte Klimaanlage, insbesondere eine mehrzonige Klimaanlage, für ein Fahrzeug vorzusehen.

Diese Aufgabe wird gelöst durch eine Klimaanlage mit den Merkmalen des Anspruchs 1. Vorteilhafte Ausgestaltungen sind Gegenstand der Unteransprüche.

Die Erfindung betrifft eine Fahrzeug-Klimaanlage mit einem Luftführungsgehäuse, mindestens einem im Luftführungsgehäuse angeordneten Verdampfer und mindestens einem im Luftführungsgehäuse angeordneten Heizer und/oder Zuheizer, wobei das Luftführungsgehäuse mehrteilig ausgebildet ist, aufweisend einen Verdampfergehäusebereich, einen Heizergehäusebereich und einem Verteilergehäusebereich, im Verteilergehäusebereich des Luftführungsgehäuses mindestens eine variable Trennwand anordenbar ist, welche einen ersten Luftstrom von einem zweiten Luftstrom getrennt im Verteilergehäusebereich weiterführt, der erste Luftstrom dem Frontbereich zuführbar ist, und der zweite Luftstrom zumindest teilweise und in bestimmten Betriebszuständen dem Fondbereich zuführbar ist, im Verteilergehäusebereich eine Mehrzahl von Abgängen zum Anschließen der Luftkanäle in den Front- und Fondbereich des Fahrzeugs vorgesehen ist. Hierbei ist der Verteilergehäusebereich durch ein zweigeteiltes Verteilergehäuse und verschiedene Anschlussteile gebildet, in einer Öffnung im Verteilergehäuse ist mindestens eine Klappe zur Regelung einer Luftaustrittsöffnung zum Fondbereich und/oder Frontbereich, insbesondere dem Frontfußraum, integriert angeordnet, und die Öffnung, in deren Bereich die Klappe angeordnet ist, ist durch ein den Abgang bildendes Anschlussteil von außen her abgedeckt, welches den Anschluss für den nachfolgenden Luftkanal bildet. Durch die Integration von Klappen des Fondbereichs ins Verteilergehäuse lässt sich ein standardisiertes System für Klimaanlagen unterschiedlicher Ausgestaltung, wie unterschiedlicher Klimazonenanzahl und/oder unterschiedlichen Verdampfem/Heizem/Zuheizern und/oder unterschiedlichen Klappenregelungen realisieren, wodurch verschiedene der Bauteile in erhöhten Stückzahlen herstellbar sind, so dass sich insgesamt die Kosten durch eine verringerte Anzahl von unterschiedlichen Werkzeugen für die Herstellung sowie die vereinfachte Lagerhaltung der verringerten Teileanzahl sowie der einfacheren Auslegung der Luftführungsgehäuse, bspw. in Bezug auf die Berechnung des Strömungsverlaufs, senken lassen. Anpassungen sind relativ einfach durchführbar, insbesondere sind in der Regel lediglich Anschlussteile abzuändern, so dass die wesentlichen Bauteile unverändert bleiben können. Dadurch, dass abdeckende Anschlussteile vorgesehen werden, können die Klappen in Folge einer besseren Zugänglichkeit einfach in das Verteilergehäuse eingebaut werden. Die Anbringung der Anschlussteile erfolgt zur Vereinfachung der Montage bevorzugt erst nach der Montage der Klappen. Die Integration der Klappen ins Verteilergehäuse ermöglicht zudem eine Trennung der Abgänge vom Verteilergehäuse, d.h. die Enden der Abgänge, an welchen die Luftkanäle angeschlossen werden, können bei Bedarf auch beabstandet von den Klappen angeordnet sein, so dass eine günstige Strömung des entsprechenden Luftstroms und/oder eine verbesserte Anpassung an den vorhandenen Bauraum möglich ist. Insbesondere lassen sich durch kleine Anschlussteile Klimaanlagen einfach an unterschiedliche Fahrzeuge, deren Bauräume und Anschlussbedingungen für die Luftkanäle anpassen. Bevorzugt ist im Verteilergehäuse mindestens eine Luftaustrittsöffnung zur Fondbelüftung mit einer Klappe angeordnet, welcher durch ein Anschlussteil von außen her abgedeckt ist. Insbesondere bevorzugt deckt das Anschlussteil, welches die Luftaustrittsöffnung zum Fondfußraum abdeckt und einen Abgang zum Anschließen des Luftkanals zum Fondfußraum aufweist, gleichzeitig auch eine Öffnung zum Frontfußraum ab, und weist einen Abgang zum Anschließen des Luftkanals zum Frontfußraum auf. Somit sind zwei Abgänge raumsparend in ein Anschlussteil integriert.

In der Trennwand ist bevorzugt mindestens eine Öffnung vorgesehen, in welcher eine Klappe angeordnet ist, um ein Durchströmen von Luft von einem Teilstrom zum anderen Teilstrom zu ermöglichen. Diese klappengeregelte Öffnung dient insbesondere der Erhöhung des Luftmassenstroms im Falle eines Defrostbetriebs, so dass die gesamte, den Heizer (und Zuheizer) durchströmende Luft dem Defrostaustritt zuführbar ist. Hierfür ist bevorzugt eine Koppelung für die Betätigung der Klappe vorgesehen, welche ein Öffnen der Klappe beim maximaler Heizleistung und Gebläseleistung im Defrostbetrieb vorsieht.

Die variable Trennwand ermöglicht zudem eine einfache Veränderung der Klimaanlage von einer im Frontbereich komfortablen Klimaanlage mit einer Temperaturschichtung, bspw. für Sportwagen mit Notsitzen im Fondbereich, in eine Klimaanlage für eine Limousine, welche eine vierzonige Klimatisierung vorsieht. Hierbei können die wesentlichen Bauteile der Klimaanlage und des Gehäuses, insbesondere das Verteilergehäuse, im Wesentlichen unverändert bleiben, lediglich eine anders ausgebildete Trennwand ist in das Verteilergehäuse einzusetzen.

Bevorzugt sind die Abgänge zu Seiten- und/oder Mitteldüsen und/oder zum Defrostauslass direkt in das Verteilergehäuse integriert. Bei Bedarf ist jedoch auch hiefür eine Ausgestaltung mit Anschlussteilen möglich, um eine vereinfachte Anpassung an unterschiedliche Anforderungen zu ermöglichen.

Das Verteilergehäuse ist vorzugsweise entlang der Mittellängsebene des Luftführungsgehäuses unterteilt ausgebildet. Dies vereinfacht die Herstellung des Verteilergehäuses sowie dessen Montage.

Das Verteilergehäuse bildet bevorzugt einen Teil eines Horizontaltrennwandbereichs, welcher den Luftstrom in einen oberen und unteren Luftstrom trennt, wobei die Trennung der Luftströme durch die in normaler Luftströmungsrichtung nachfolgend des Horizontaltrennwandbereichs angeordnete variable Trennwand weitergeführt ist.

Vorzugsweise ist in das Luftführungsgehäuse eine Mitteltrennwand, welche in der Mittellängsebene verlaufend angeordnet ist, einsetzbar. Dies ernöglicht eine Zonentrennung von Fahrer- und Beifahrerseite - je nach Verlauf der Mitteltrennwand - im Front- und/oder Fondbereich. In der Regel, d.h. bspw. für drei Zonen oder im Falle einer Temperaturschichtung, wird jedoch nur für den Frontbereich eine derartige Trennwand vorgesehen sein.

Teil des Luftführungsgehäuses ist bevorzugt mindestens ein Adapterstück für eine Anpassbarkeit an unterschiedliche Verdampferhöhen, welches im Verdampfergehäusebereich des Luftführungsgehäuses angeordnet ist. Dies ermöglicht eine einfache Anpassung des den Verdampfer aufnehmenden Bereichs an unterschiedliche Bauhöhen. Hierbei können Einsätze im Inneren des Gehäuses zur Verkleinerung der freien Höhe, d.h. um ein Über-/unterströmen des Verdampfers zu verhindern, vorgesehen sein. Ferner sind Einsätze in Gestalt von Zwischenstücken möglich, um die Bauhöhe - ausgehend von der minimalen Verdampferhöhe, für weiche keine Zwischenstücke erforderlich sind - geeignet anzupassen. Ebenfalls kann im oberen Bereich eine Schräge vorgesehen sein, an welcher die obere Kante des Verdampfers anliegt, so dass bei großen Bauhöhen die Schräge die Luft in Richtung Heizer führt, ohne die Wärmeübertragungsfläche zu verringern, bei kleinen Bauhöhen jedoch die abströmseitige obere Kante des Verdampfers direkt am unteren Ende der Schräge anliegt.

Im Folgenden wird die Erfindung anhand eines Ausführungsbeispiels mit Varianten teilweise unter Bezugnahme auf die belegende. Zeichnung näher erläutert. In der Zeichnung zeigen:
- Fig. 1: eine geschnittene, schematische Seitenansicht des zentralen Teils einer Kraftfahrzeug-Klimaanlage gemäß dem Ausführungs- beispiel,
- Fig. 2: eine perspektivische Explosionsdarstellung der Klimaanlage von Fig. 1,
- Fig. 3: eine geschnittene, schematische Seitenansicht des zentralen Teils einer Kraftfahrzeug-Klimaanlage gemäß einer ersten Varian- te des Ausführungsbeispiels,
- Fig. 4: eine geschnittene, schematische Seitenansicht des zentralen Teils einer Kraftfahrzeug-Klimaanlage gemäß einer zweiten Va- riante des Ausführungsbeispiels sowie einer angedeuteten dritten Variante des Ausführungsbeispiels,
- Fig. 5: eine perspektivische Ansicht des Gehäuses der Kraftfahrzeug- Klimaanlage von Fig. 1,
- Fig. 6: eine Fig. 5 entsprechende Darstellung mit abgenommenen Ab- gängen zur Fondbelüftung, zum Fondfußraum und zum Frontfuß- raum.

Eine Kraftfahrzeug-Klimaanlage 1 weist ein mehrteiliges Luftführungsgehäuse 2 aus Kunststoff auf, in welchem ein Verdampfer 3, ein Heizer 4 sowie ein PTC-Zuheizer 5 zur Temperierung der dem Fahrzeuginnenraum zuzuführenden Luft angeordnet sind. Das Luftführungsgehäuse 2 ist im Wesentlichen spiegelbildlich zur Mittellängsebene ausgebildet.

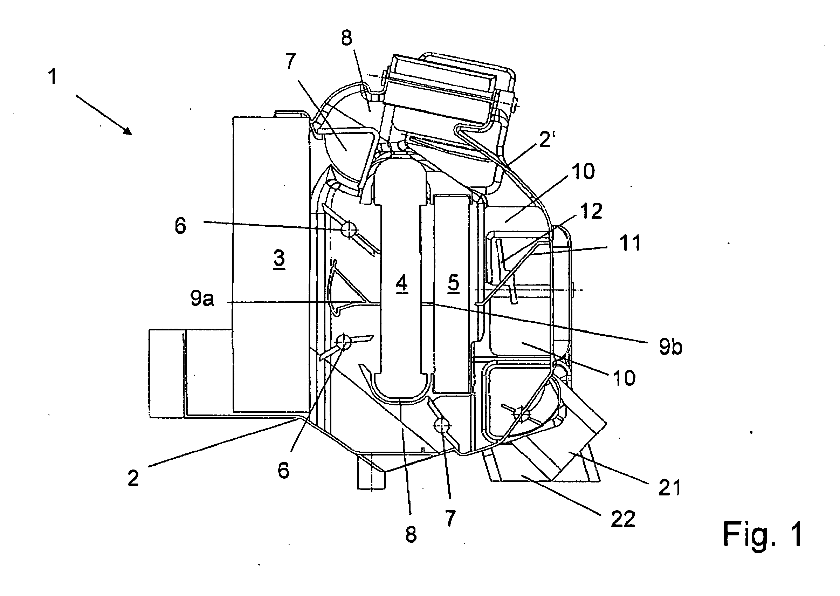

Die von einem Gebläse (nicht dargestellt) kommende, in Fig. 1 entgegen der Blickrichtung anströmende Luft wird in Folge des in diesem nicht spiegelbildlich zur Mittellängsebene ausgebildeten und sich keilförmig verjüngenden Bereichs nach rechts in Fig. 1 umgelenkt und durch den Verdampfer 3 geleitet, und anschließend - geregelt über im Gehäuse 2 angeordnete Warmluftklappen 6 und ebenfalls im Gehäuse 2 angeordnete Kaltluftklappen 7 durch den Heizer 4 und Zuheizer 5 oder über einen von zwei Kaltluftbypässen 8 vorbei am Heizer/Zuheizer geleitet. Das Gehäuse 2 weist hierbei eine durch entsprechend ausgebildete Trennwände gebildete Horizontaltrennung 9 ausgehend von einem Bereich zwischen dem Verdampfer 3 und dem Heizer 4 und fortgeführt zwischen dem Heizer 4 und Zuheizer 5 auf. Die Horizontaltrennung 9 ist somit durch den Heizer 4 in zwei Bereiche unterteilt, nämlich einen ersten Horizontaltrennwandbereich 9a und einen zweiten Horizontaltrennwandbereich 9b.

Aufgeteilt durch die Horizontaltrennung 9 ergeben sich zwei unterschiedlich temperierte Luftströme, nämlich ein oberer Luftstrom, wobei von diesem Luftstrom zuerst der obere Bereich des Verdampfers 3 durchströmt wurde, anschließend der obere Kaltluftbypass 8 oder der obere Bereich von Heizer/Zuheizer durchströmt wurde, und im Falle einer Mischtemperierung die Teilluftstörne durch den Kaltluftbypasses 8 und den Heizer/Zuheizer in einem oberen Mischbereich 10 nach dem Zuheizer 5 wieder zusammengeführt und vermischt wurden, und ein unterer Luftstrom, wobei von diesem Luftstrom zuerst der untere Bereich des Verdampfers 3 durchströmt wurde, anschließend der untere Kaltluftbypass 8 oder der untere Bereich von Heizer/Zuheizer durchströmt wurde, und im Falle einer Mischtemperierung die Teilluftstörne durch den Kaltluftbypasses 8 und den Heizer/Zuheizer in einem unteren Mischbereich 10 nach dem Zuheizer 5 wieder zusammengeführt und vermischt wurden. Die Horizontaltrennung 9 wird hierbei im Bereich der Mischbereiche 10, also nach dem Zuheizer 5, durch eine variable Trennwand 11 weitergeführt, welche direkt an den Zuheizer 5 anschließt. Die variable Trennwand 11 ist getrennt vom Gehäuse 2 ausgebildet und verläuft vorliegend ausgehend von einem Bereich in Verlängerung der Horizontaltrennung 9 schräg nach oben. In der variablen Trennwand 11 sind zwei vorliegend rechteckförmig ausgebildete Öffnungen vorgesehen, welche durch Klappen 12 verschließbar sind. Hierbei ist eine Klappe der Fahrerseite und die andere Klappe der Beifahrerseite zugeordnet.

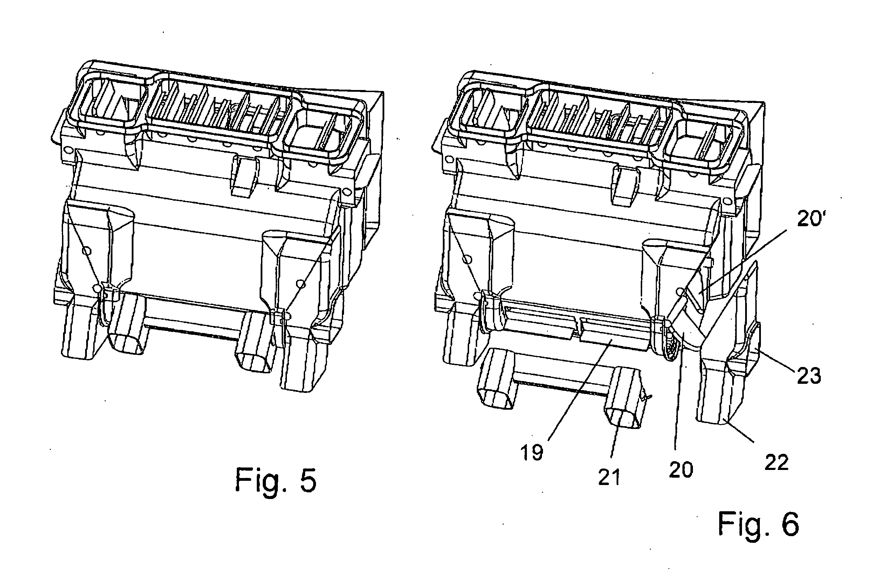

Das Gehäuse 2 weist eine Mehrzahl verschiedener Luftaustrittsöffnungen auf, nämlich für den Frontbereich oben angeordnete Defrost-Luftaustrittsöffnungen 13, durch welche die Luft zum Defrostauslass gelangen kann, um beispielsweise einen Beschlag von der Windschutzscheibe zu entfernen, eine Mitteldüsen-Luftaustrittsöffnung 14, durch welche die Luft zur oder zu den Mitteldüsen gelangen kann, seitlich angeordnete Seitendüsen-Luftaustrittsöffnungen 15, durch welche Luft zur entsprechenden Seitendüse gelangen kann, Fußraum-Luftaustrittsöffnungen 16, durch welche Luft zu den entsprechenden Ausströmern im Front-Fußraum gelangen kann, und für den Fondbereich Fondbelüftungs-Luftaustrittsöffnungen 17 und Fondfußraum-Luftaustrittsöffnungen 18. Vorliegend sind in das Gehäuse 2 auch Klappen zur Regelung der Luftverteilung im Fondbereich sowie den Front-Fußraum integriert. Klappen zur Regelung der Luftverteilung im Fondbereich sind in Fig. 1 und 6 ersichtlich, wobei das Bezugszeichen 20 die Klappe für den Fondfußraum bezeichnet.

Auf Grund des gemäß dem Ausführtrugsbeispiel vorgesehenen, schräg nach oben gerichteten Verlaufs der variablen Trennwand 11 sind die Fußraum-Luftaustrittsöffnungen 16 im Bereich des oben genannten unteren Luftstroms angeordnet, welcher ansonsten im Wesentlichen dem Fondbereich zugeordnet ist. Dies ermöglicht eine Temperaturschichtung, d.h. der Fußraum kann wärmer temperiert werden als der obere Bereich, was in der Regel als angenehm empfunden wird.

Zudem sind in der variablen Trennwand 11 des ersten Ausführungsbeispiels besagte Klappen 12 angeordnet, welche es im Defrostbetrieb ermöglichen, zusätzliche warme Luft vom unteren Luftstrom in den oberen Bereich zu führen, so dass die maximale Gebläseleistung für das Entfrosten der Scheiben zur Verfügung steht.

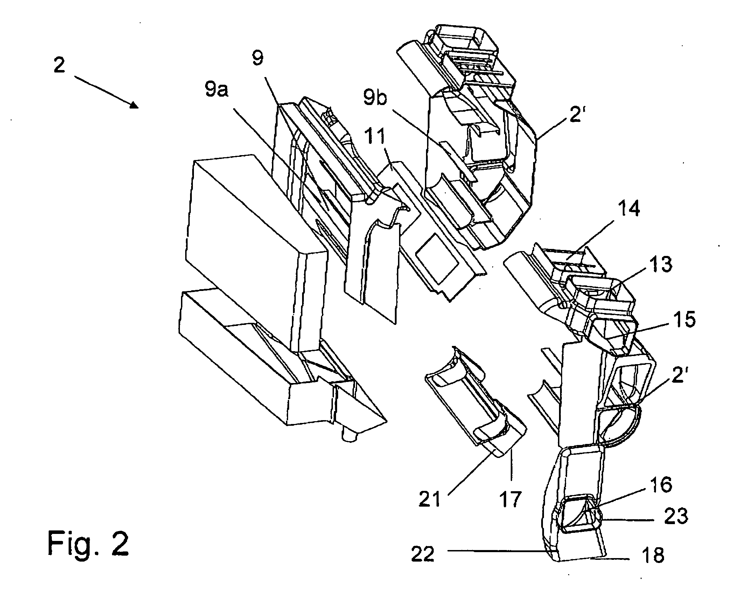

Das mehrteilige Gehäuse 2 mit seinen Bereichen Verdampfergehäusebereich, Heizergehäusebereich und Verteilergehäusebereich weist, wie in Fig. 2 dargestellt, eine Mehrzahl von Einzelteilen auf, welche miteinander verbunden sind, wobei in Fig. 1 der obere Teil des Verdampfergehäusebereichs nicht dargestellt ist, dafür jedoch verschiedene Teilungslinien sichtbar sind. Der oberste Teil des Verdampfergehäusebereichs weist eine sich über die Breite des Verdampfers verjüngende Gestalt auf, wie aus Fig. 2 ersichtlich ist, so dass die von der breiten Seite her anströmende Luft relativ gleichmäßig auf die Fläche des Verdampfers 3 verteilt wird. Der Verdampfer 3 sitzt in einem unteren Gehäuseteil, welches über die gesamte Breite des Verdampfers 3 einstückig ausgebildet ist. Das untere Gehäuseteil bildet neben der Aufnahme für den Verdampfer 3 einen Teil des unteren Kaltluftbypasses 8 und endet in einem Bereich unterhalb des Heizers/Zuheizers, kurz vor der unteren Kaltluftklappe 7. Oberhalb des unteren Gehäuseteils ist luftabströmseitig des Verdampfers 3 im Heizergehäusebereich ein weiteres Gehäuseteil angeordnet, welches einen Anfangsbereich des oberen Kaltluftbypasses 8 und den ersten Horizontaltrennwandbereich 9a bildet. In diesem zwischen Verdampfer 3 und Heizer 4 angeordneten Teil sind die Warmluftklappen 6 sowie die obere Kaltluftklappe 7 angeordnet.

Im nachfolgenden Bereich, welcher die zweite Hälfte des Heizergehäusebereichs und den Verdampfergehäusebereich umfasst, ist das Gehäuse 2 vorliegend in der Mittellängsebene aus Montagegründen unterteilt und wird von den Seiten her um den Zuheizer 5 gebaut, wobei der zweite Horizontaltrennwandbereich 9b, welcher zwischen Heizer und Zuheizer angeordnet ist, mittig unterteilt ausgebildet ist. In diesem Bereich des Gehäuses 2 ist ferner die untere Kaltluftklappe 7 in einem Bereich unterhalb des Zuheizers 5 angeordnet. Ferner wird in diesen Bereich des Gehäuses 2 die variable Trennwand 11 samt Klappen 12 eingesetzt. Hierbei ist in diesem Bereich des Gehäuses 2 eine Mehrzahl von klappengeregeften Öffnungen und Abgängen ausgebildet, durch welche die Luft auf die verschiedenen, an die Abgänge angeschlossenen Luftkanäle, welche zum Fahrzeuginnenraum führen, verteilt wird, so dass auf den im der Mittellängsebene unterteilten Kern dieses Verteilergehäusebereichs auch als Verteilergehäuse 2' Bezug genommen wird. Im Verteilergehäuse 2' sind vorliegend auch verschiedene Klappen angeordnet, welche die Luftverteilung regeln, nämlich die Klappen für den Fond- und Frontfußraum (Klappe 20 Fondfußraum, Klappe 20' Frontfußraum) sowie die Klappen 19 für die Fondbelüftung. Am Verteilergehäuse 2' sind mittels Anschlussteilen verschiedene Abgänge 21, 22 zu den Luftkanälen angebracht, wie insbesondere ein Anschlussteil mit zwei Abgängen 21, von welchen aus die beiden Luftkanäle für die Fondbelüftung abgehen, das von schräg unten her an das Verteilergehäuse 2' anbringbar ist, und zwei seitliche Anschlussteile mit Abgängen 22 zum Fondfußraum sowie einem seitlich angeordneten Abgang 23 zum Frontfußraum, an welche die entsprechenden Luftkanäle zum Front- und Fondfußraum anbringbar sind. Dagegen sind die Abgänge zu den Seitendüsen, zur Mitteldüse und zum Defrostauslass direkt in das Verteilergehäuse 2' integriert.

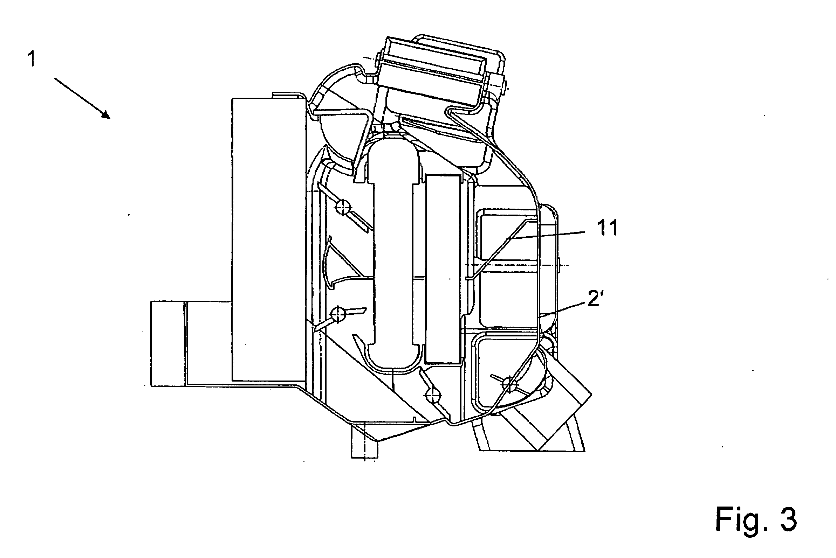

Die erste Variante des Ausführungsbeispiels, die in Fig. 3 dargestellt ist, unterscheidet sich vom Ausführungsbeispiel der Figuren 1 und 2 dadurch, dass in der variable Trennwand 11 keine klappengeregelten Öffnungen ausgebildet sind, d.h. eine Vergrößerung des Luftmassenstroms im Defrostbetrieb durch eine Beimischung des unteren Luftstroms ist bei dieser etwas vereinfachten Ausführungsform nicht möglich.

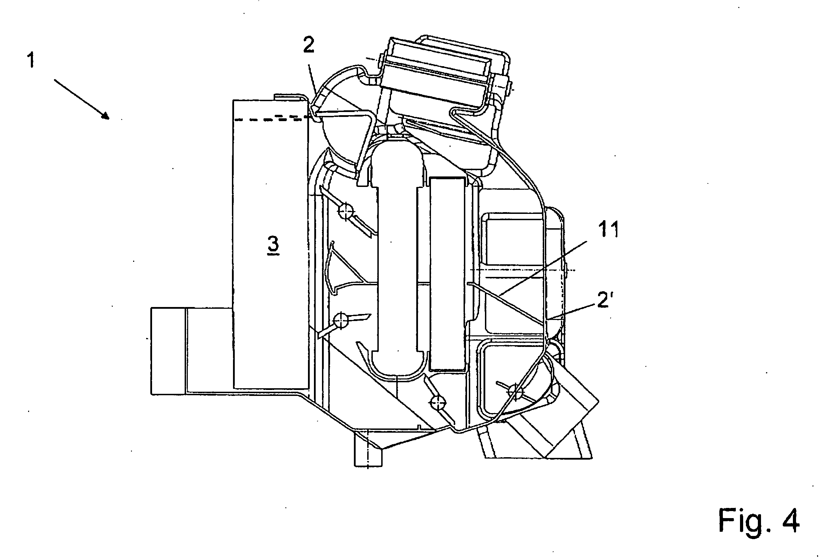

Die in Fig. 4 dargestellte zweite Variante des Ausführungsbeispiels, unterscheidet sich vom Ausführungsbeispiel der Figuren 1 und 2 dadurch, dass die variable Trennwand 11 nicht schräg nach oben, sondern schräg nach unten verläuft. Somit ist keine Temperaturschichtung im Frontbereich möglich, aber eine getrennte Temperaturregelung für den Front- und Fondbereich, so dass die Klimaanlage drei oder vier Klimazonen aufweist, je nach Trennwand in der Mittellängsebene der Klimaanlage im oberen Luftstrom (drei Klimazonen) oder im oberen und unteren Luftstrom (vier Klimazonen). Bei Vorsehen einer Trennwand sind zudem die Warmluft-/Kaltluftklappen unterteilt auszubilden, so dass der obere und untere Luftstrom auch in der Breite zur Trennung der Fahrer- von der Beifahrerseite unterteilt sind.

Das Vorsehen einer Trennwand in der Mittellängsebene ist ebenfalls beim Ausführungsbeispiel der Figuren 1 und 2 möglich. In diesem Fall sind die Warm- und Kaltluftklappen entsprechend unterteilt auszubilden und die Regelung ist entsprechend der gewünschten Regelbarkeit zu gestalten, d.h. es kann eine an sich bekannte getrennte Betätigung oder eine Koppelung der unterteilt ausgebildeten Klappen vorgesehen sein.

Die Klappenregelung kann durch eine Koppelung der Klappen, welche wiederum die Zonenzahl verringert, vereinfacht werden, so dass mit einem Gehäuse samt der hierin integrierten Klappen durch einfachste Maßnahmen unterschiedliche Klimaanlagentypen realisierbar sind.

In Fig. 4 ist zudem eine weitere Variante in Bezug auf die variable Anpassbarkeit des Gehäuses 2 an die Verdampferhöhe gestrichelt dargestellt. So lässt sich durch ein entsprechend ausgebildetes oberes Verdampfergehäuseteil in Verbindung mit einem entsprechend angepassten Anschlussstück und ohne Veränderung der weiteren Teile des Gehäuses, insbesondere des Verteilergehäuses 2', im Wesentlichen ein Gehäuse für verschiedene Verdampferhöhen verwenden.

Zum Ausgleich unterschiedlicher Bauhöhen können alternativ auch Adapterstücke verwendet werden, welche zwischen die luftanströmseftigen Gehäusebauteile für die geringste Verdampferhöhe eingesetzt werden. Adapterstücke können auch dahingehend ausgestaltet sein, dass sie - ausgehend von der größten Bauhöhe - den Strömungsweg der Luft in Bezug auf kleinere Bauhöhen korrigieren, d.h. es können Einsätze für das Gehäuse vorgesehen sein.

Gemäß einer nicht in der Zeichnung dargestellten Variante des Gehäuses sind über die Höhe des Heizers verteilt drei Warmluftklappen (oder Warmluftklappenpaare) angeordnet, was u.a. Vorteile in Bezug auf die Temperaturschichtung bringen kann. Die weitere Ausgestaltung des Gehäuses, insbesondere des Verteilergehäuses entspricht der vorstehend unter Bezugnahme auf die Figuren 1 und 2 beschriebenen Ausgestaltung, d.h. es ist lediglich ein Austausch des oberen Gehäuseteils erforderlich, welches zwischen Verdampfer und Heizer angeordnet ist.

Entfällt der Zuheizer, so kann der Zwischenraum - ohne wesentliche Veränderung des Gehäuses - durch eine länger ausgebildete variable Trennwand überbrückt werden, d.h. im Wesentlichen das gleiche Gehäuse, insbesondere das Verteilergehäuse, kann auch für einfache Klimaanlagen verwendet werden.

## Patentansprüche

1. Fahrzeug-Klimaanlage mit einem Luftführungsgehäuse (2), mindestens einem im Luftführungsgehäuse (2) angeordneten Verdampfer (3) und mindestens einem im Luftführungsgehäuse angeordneten Heizer (4) und/oder Zuheizer (5), wobei das Luftführungsgehäuse (2) mehrteilig ausgebildet ist, aufweisend einen Verdampfergehäusebereich, einen Heizergehäusebereich und einem Verteilergehäusebereich, im Verteilergehäusebereich des Luftführungsgehäuses (2) mindestens eine variable Trennwand (11) anordenbar ist, welche einen ersten Luftstrom von einem zweiten Luftstrom getrennt im Verteilergehäusebereich weiterführt, der erste Luftstrom dem Frontbereich zuführbar ist, und der zweite Luftstrom zumindest teilweise und in bestimmten Betriebszuständen dem Fondbereich zuführbar ist, im Verteilergehäusebereich eine Mehrzahl von Abgängen (21, 22, 23) zum Anschließen der Luftkanäle in den Front- und Fondbereich des Fahrzeugs vorgesehen ist,
**dadurch gekennzeichnet, dass**
der Verteilergehäusebereich durch ein zweigeteiltes Verteilergehäuse (2') und verschiedene Anschlussteile gebildet ist,
in einer Öffnung im Verteilergehäuse (2') mindestens eine Klappe (19, 20, 20') zur Regelung einer Luftaustrittsöffnung zum Fondbereich und/oder Frontbereich integriert angeordnet ist, und
die Öffnung, in deren Bereich die Klappe (19, 20, 20') angeordnet ist, durch ein den Abgang (21, 22, 23) bildendes Anschlussteil von außen her abgedeckt ist, welches den Anschluss für den nachfolgenden Luftkanal bildet.

2. Klimaanlage nach Anspruch 1, **dadurch gekennzeichnet, dass** im Verteilergehäuse (2') mindestens eine Luftaustrittsöffnung zur Fondbelüftung mit einer Klappe (19) angeordnet ist, welcher durch ein Anschlussteil von außen her abgedeckt ist.

3. Klimaanlage nach Anspruch 2, **dadurch gekennzeichnet, dass** das Anschlussteil, welches die Luftaustrittsöffnung zum Fondfußraum abdeckt und einen Abgang (22) zum Anschließen des Luftkanals zum Fondfußraum aufweist, gleichzeitig auch eine Öffnung zum Frontfußraum abdeckt und einen Abgang (23) zum Anschließen des Luftkanals zum Frontfußraum aufweist.

4. Klimaanlage nach einem der vorhergehenden Anspruch, **dadurch gekennzeichnet, dass** in der Trennwand (11) mindestens eine Öffnung vorgesehen ist, in welcher eine Klappe (12) angeordnet ist, um ein Durchströmen von Luft von einem Teilstrom zum anderen Teilstrom zu ermöglichen.

5. Klimaanlage nach Anspruch 4, **dadurch gekennzeichnet, dass** eine Koppelung für die Betätigung der Klappe (12) vorgesehen ist, welche ein Öffnen der Klappe (12) beim maximaler Heizleistung und Gebläseleistung im Defrostbetrieb vorsieht.

6. Klimaanlage nach einem der vorhergehenden Ansprüche, **dadurch gekennzeichnet, dass** die Abgänge zu Seiten- und/oder Mitteldüsen und/oder zum Defrostauslass direkt in das Verteilergehäuse (2') integriert sind.

7. Klimaanlage nach einem der vorhergehenden Ansprüche, **dadurch gekennzeichnet, dass** das Verteilergehäuse (2') entlang der Mittellängsebene des Luftführungsgehäuses (2) unterteilt ausgebildet ist.

8. Klimaanlage nach einem der vorhergehenden Ansprüche, **dadurch gekennzeichnet, dass** das Verteilergehäuse (2') einen Teil eines Horizontaltrennwandbereichs (9) bildet, welcher den Luftstrom in einen oberen und unteren Luftstrom trennt, wobei die Trennung der Luftströme durch die in normaler Luftströmungsrichtung nachfolgend des Horizontaltrennwandbereichs (9) angeordnete variable Trennwand (11) weitergeführt ist.

9. Klimaanlage nach einem der vorhergehenden Ansprüche, **dadurch gekennzeichnet, dass** in das Luftführungsgehäuse (2) eine Mitteltrennwand, welche in der Mittellängsebene, verlaufend angeordnet ist, einsetzbar ist.

10. Klimaanlage nach einem der vorhergehenden Ansprüche, **dadurch gekennzeichnet, dass** Teil des Luftführungsgehäuses (2) mindestens ein Adapterstück für eine Anpassbarkeit an unterschiedliche Verdampferhöhen ist.

## Claims

1. A vehicle air conditioning system comprising an air guide housing (2), at least one evaporator (2) disposed in the air guide housing (2), and at least one heater (4) and/or an additional heater (5) disposed in the air guide housing, wherein the air guide housing (2) is composed of multiple components and has an evaporator housing region, a heater housing region, and a distributor housing region; at least one variable partition wall (11) can be disposed in the distributor housing region of the air guide housing (2), the variable partition wall (11) forwarding a first air flow, separately from a second air flow, in the distributor housing region, it being possible to supply the first air flow to the front region and to supply the second air flow to the rear region at least partially and in certain operating states; a plurality of outlets (21, 22, 23) is provided in the distributor housing region for closing the air ducts in the front and rear regions of the motor vehicle,
**characterized in that**
the distributor housing region is formed by a two-part distributor housing (2') and various connecting pieces, at least one flap (19, 20, 20') for regulating an air outlet opening to the rear region and/or front region is integrated in an opening in the distributor housing (2'), and the opening, in the region of which the flap (19, 20, 20') is disposed, is covered on the outside by a connecting piece that forms the outlet (21, 22, 23), the connecting piece forming the connection for the downstream air duct.

2. The air conditioning system according to claim 1, **characterized in that** at least one air outlet opening, having a flap (19), for rear ventilation is disposed in the distributor housing (2'), the air outlet opening being closed on the outside by a connecting piece.

3. The air conditioning system according to claim 2, **characterized in that** the connecting piece, which covers the air outlet opening to the rear floor and has an outlet (22) for closing the air duct to the rear floor, simultaneously likewise covers an opening to the front floor and has an outlet (23) for closing the air duct to the front floor.

4. The air conditioning system according to one of the preceding claims, **characterized in that** at least one opening is provided in the partition wall (11), in which a flap (12) is disposed for enabling air to flow from one partial flow to the other partial flow.

5. The air conditioning system according to claim 4, **characterized in that** a coupling is provided for actuating the flap (12), and ensures that the flap (12) is opened for maximum heat output and blower output during the defrosting operation.

6. The air conditioning system according to one of the preceding claims, **characterized in that** the outlets to the side nozzles and/or middle nozzles and/or to the defrosting outlet are integrated directly in the distributor housing (2').

7. The air conditioning system according to one of the preceding claims, **characterized in that** the distributor housing (2') is subdivided along the central longitudinal plane of the air guide housing (2).

8. The air conditioning system according to one of the preceding claims, **characterized in that** the distributor housing (2') forms a part of a horizontal partition wall region (9) that divides the air flow into an upper air flow and a lower air flow, wherein the separation of the air flows is forwarded by the variable partition wall (11) which is disposed downstream - in the normal direction of air flow - of the horizontal partition wall region (9).

9. The air conditioning system according to one of the preceding claims, **characterized in that** a central partition wall, which extends in the central longitudinal plane, can be inserted into the air guide housing (2).

10. The air conditioning system according to one of the preceding claims, **characterized in that** part of the air guide housing (2) is at least one adapter piece for adapting to different evaporator heights.

## Revendications

1. Système de climatisation d'un véhicule, comprenant un carter de guidage d'air (2), au moins un évaporateur (3) disposé dans le carter de guidage d'air (2) et au moins un dispositif de chauffage (4) et / ou un dispositif de chauffage auxiliaire (5) disposé dans le carter de guidage d'air, où le carter de guidage d'air (2) est configuré en plusieurs parties, présentant une zone de carter d'évaporateur, une zone de carter de dispositif de chauffage et une zone de carter de répartiteur, au moins une paroi de séparation variable (11) pouvant être agencée dans la zone de carter de répartiteur du carter de guidage d'air (2), paroi de séparation qui, dans la zone de carter de répartiteur, continue à guider un premier flux d'air séparément par rapport à un deuxième flux d'air, le premier flux d'air pouvant être fourni au secteur avant, le deuxième flux d'air pouvant, au moins partiellement et dans certaines conditions de fonctionnement, être fourni au secteur arrière, une pluralité de sorties (21, 22, 23) étant prévue pour le raccordement des conduits d'air dans le secteur avant et arrière du véhicule,
**caractérisé en ce que**
la zone de carter de répartiteur est formée par un carter de répartiteur (2') en deux parties et par différentes pièces de raccordement,
au moins un volet (19, 20, 20') servant au réglage d'une ouverture de sortie d'air pour le secteur arrière et / ou pour le secteur avant est disposé de façon intégrée dans une ouverture située dans le carter de répartiteur (2'), et
l'ouverture, dans le secteur de laquelle est disposé le volet (19, 20, 20'), est recouverte, de l'extérieur, par une pièce de raccordement formant la sortie (21, 22, 23), pièce de raccordement qui forme le raccord pour le conduit d'air suivant.

2. Système de climatisation selon la revendication 1, **caractérisé en ce qu'**au moins une ouverture de sortie d'air comportant un volet (19) et servant à la ventilation de l'arrière est disposée dans le carter de répartiteur (2'), ouverture de sortie d'air qui est recouverte, de l'extérieur, par une pièce de raccordement.

3. Système de climatisation selon la revendication 2, **caractérisé en ce que** la pièce de raccordement qui recouvre l'ouverture de sortie d'air pour l'espace pour les pieds, à l'arrière, et présente une sortie (22) servant au raccordement du conduit d'air pour l'espace pour les pieds, à l'arrière, recouvre aussi, en même temps, une ouverture pour l'espace pour les pieds, à l'avant, et présente une sortie (23) servant au raccordement du conduit d'air pour l'espace pour les pieds, à l'avant.

4. Système de climatisation selon l'une quelconque des revendications précédentes, **caractérisé en ce qu'**il est prévu, dans la paroi de séparation (11), au moins une ouverture dans laquelle est disposé un volet (12) pour permettre une circulation d'air entre un flux partiel et un autre flux partiel.

5. Système de climatisation selon la revendication 4, **caractérisé en ce que** qu'il est prévu un couplage pour l'actionnement du volet (12), actionnement qui prévoit une ouverture du volet (12) au cours du fonctionnement en mode dégivrage, le chauffage et la soufflante étant à leur puissance maximale.

6. Système de climatisation selon l'une quelconque des revendications précédentes, **caractérisé en ce que** les sorties pour les buses latérales et / ou centrales et / ou pour la sortie de dégivrage sont intégrées directement dans le carter de répartiteur (2').

7. Système de climatisation selon l'une quelconque des revendications précédentes, **caractérisé en ce que** le carter de répartiteur (2') est configuré en étant subdivisé le long du plan longitudinal médian du carter de guidage d'air (2).

8. système de climatisation selon l'une quelconque des revendications précédentes, **caractérisé en ce que** le carter de répartiteur (2') forme une partie d'une zone de paroi de séparation horizontale (9) qui sépare le flux d'air en un flux d'air supérieur et inférieur, où la séparation des flux d'air est poursuivie par la paroi de séparation variable (11) disposée en faisant suite à la zone de paroi de séparation horizontale (9), dans la direction normale d'écoulement de l'air.

9. Système de climatisation selon l'une quelconque des revendications précédentes, **caractérisé en ce qu'**une paroi de séparation centrale, qui est disposée en s'étendant dans le plan longitudinal médian, peut être insérée dans le carter de guidage d'air (2).

10. Système de climatisation selon l'une quelconque des revendications précédentes, **caractérisé en ce qu'**au moins un adaptateur, prévu pour une adaptabilité à différentes hauteurs d'évaporateur, fait partie du carter de guidage d'air (2).
